# EUROPEAN PATENT SPECIFICATION

(11) **EP 1 696 139 B1**
(45) Date of publication and mention of the grant of the patent: **29.02.2012**
(21) Application number: 06110233.1
(22) Date of filing: 21.02.2006
(51) Int. Cl.: F16B 19/10

(54) **An assembly for the threaded connection of a threaded tubular rivet and a spacer bush**
Vorrichtung für die Schraubverbindung einer köcherförmigen Gewindeniete und einer Abstandshülse
Dispositif pour connection à vis d'un rivet vissé et d'une douille d'espacement

(30) Priority: 28.02.2005 IT TO20050124
(43) Date of publication of application: 30.08.2006
(73) Proprietor: SPECIALINSERT S.r.l., I-10142 Torino (IT)
(72) Inventor: Arduini, Piero, I-10136, TORINO (IT)
(74) Representative: Rondano, Davide

(56) References cited:
- FR-A- 2 072 945
- US-A- 3 606 416

## Description

The present invention relates to an assembly for the threaded connection of a threaded tubular rivet and a spacer bush, which assembly is suitable in particular for a material having a sandwich type structure, in which it is necessary to provide a threaded seat.

An assembly according to the preamble of independent claim 1 is known from FR-A-2072945.

The object of the present invention is to provide a device for fixing a threaded tubular rivet and a spacer bush, which allows a threaded seat to be provided in a sandwich type structure, which is simple to construct and easy to use and which at the same time allows a localized increase in the structural strength of the sandwich type structure.

The present invention achieves the above-mentioned objects by means of an assembly for the threaded connection of a threaded tubular rivet and a spacer bush having the features referred to specifically in the appended claims.

Further features and advantages of the present invention will become clear from the following detailed description, given purely by way of non-limiting example with reference to the appended drawings, in which:
- Figures 1-8 illustrate the succession of steps for assembling a threaded connection assembly in accordance with the invention in a first embodiment thereof; and
- Figures 9-16 illustrate the succession of steps for assembling a threaded connection assembly in accordance with the invention in a second embodiment thereof.

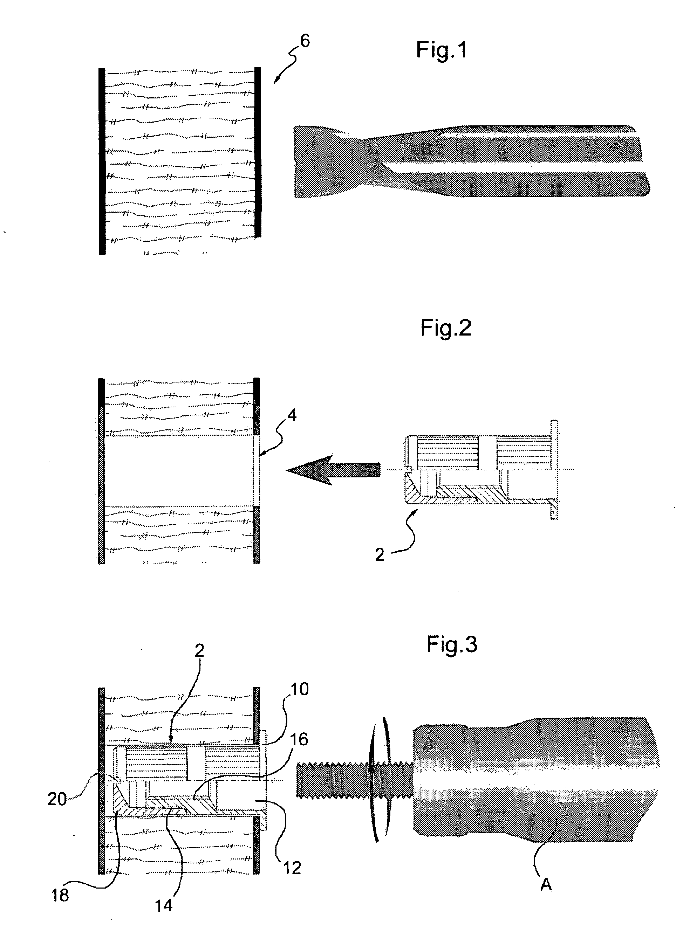

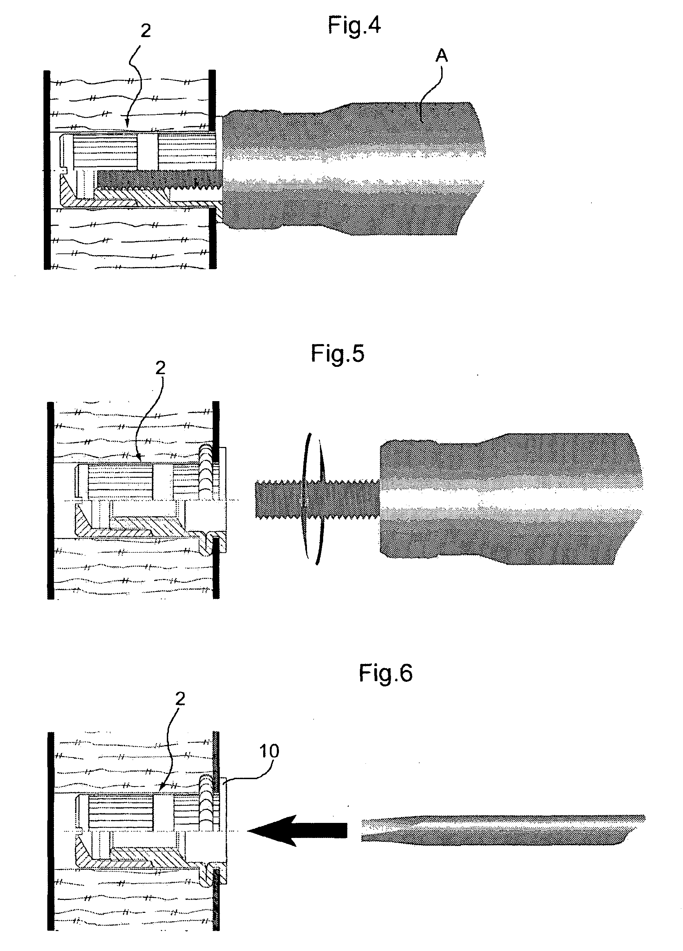

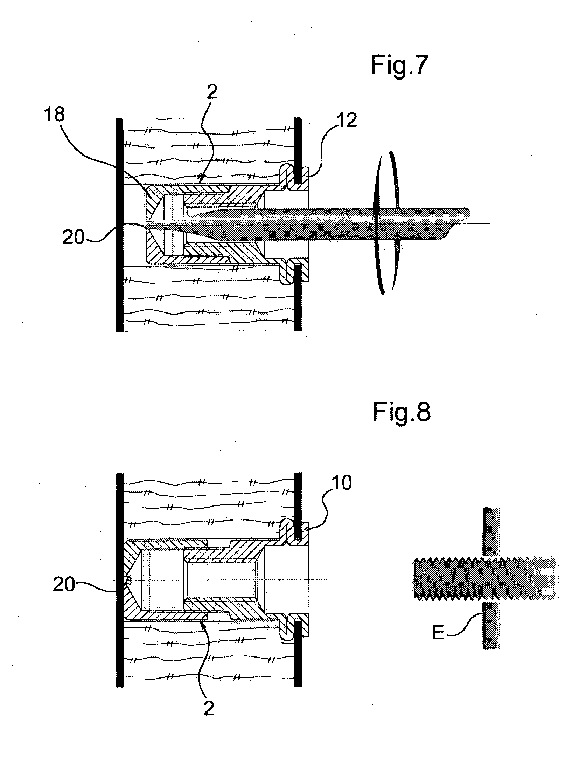

With reference to Figures 1-8, a threaded connection assembly in accordance with the invention, generally designated 2, is positioned in a receiving seat 4 of a material 6 having a sandwich type structure.

A blind hole is formed in the material 6 in such a manner that the assembly 2 to which the present invention relates is positioned therein without coming into contact with the blind wall of the seat 4.

The assembly 2 comprises a support head 10, a deformation chamber 12, a first externally threaded zone 14 and a second internally threaded zone 16, a support bush 18 which co-operates with the externally threaded zone 14, and the support bush 18 has a seat or recess 20 for receiving a tool for adjustment having a shape complementary to the recess 20.

Once the assembly 2 has been positioned in the receiving seat 4, the deformation chamber 12 is deformed by means of a positioning tool A, thereby fixing the assembly 2 to the receiving seat 4 (Figures 2-5).

Once this has been carried out, a tool having a shape complementary to the recess 20 is used to adjust the support bush 18 by rotation until it is brought into abutment against the blind wall of the seat 4.

In this manner, the material 6 having a sandwich type structure is greatly strengthened and - by means of the internal threading 16 - it is possible to fix an element E to the assembly 2 by means of a screw or other threaded assembly device.

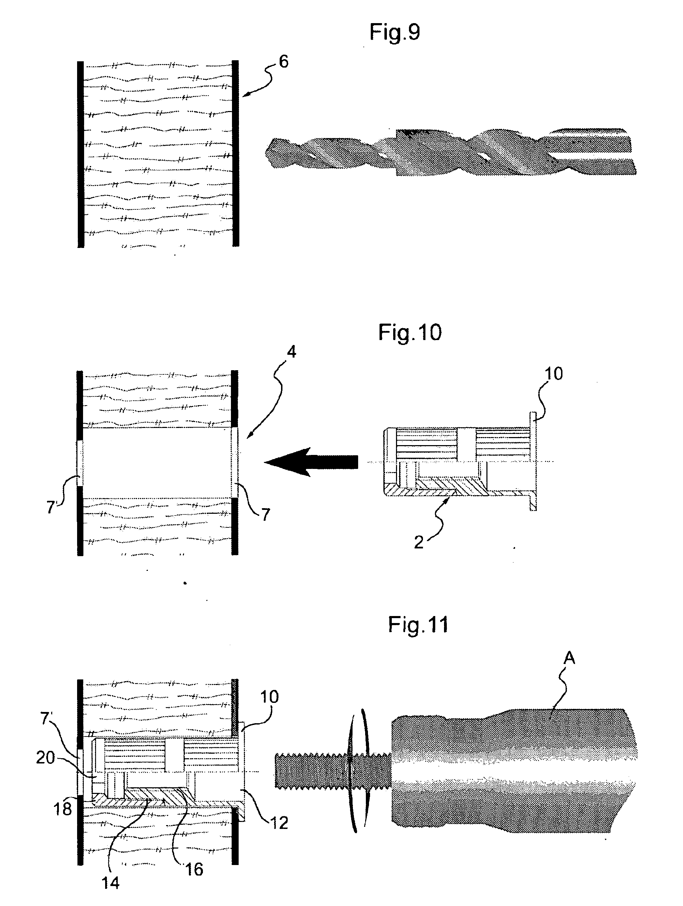

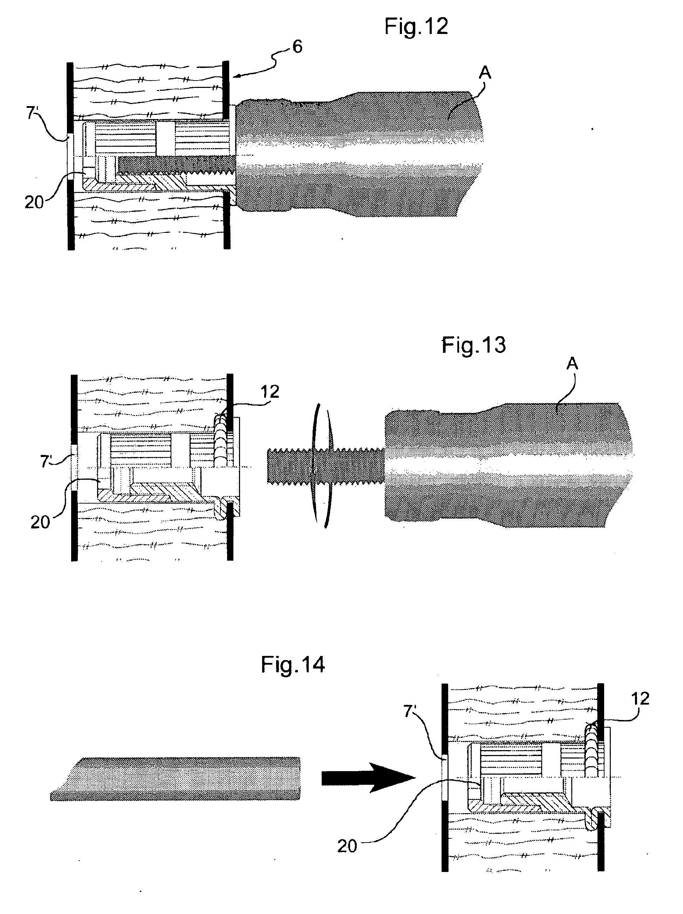

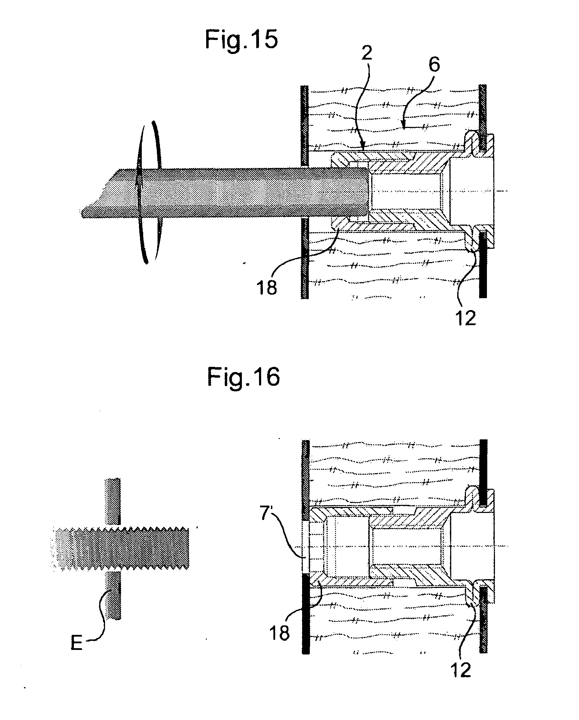

With reference to Figures 9-16, which illustrate an assembly for the threaded connection of a threaded tubular rivet and a spacer bush according to the invention, in a second embodiment and in which elements identical or corresponding to those of Figures 1-8 are indicated with the same reference numerals, the connection assembly according to the invention is generally designated 2.

The assembly 2 is positioned in a receiving seat 4 of a material 6 having a sandwich type structure.

The receiving seat 4 is formed by a hole 7 and a hole 7' having smaller dimensions than the hole 7, which holes are arranged in the same axis.

The assembly 2 comprises a support head 10, a deformation chamber 12, a first externally threaded zone 14 and a second internally threaded zone 16, and a support bush 18 which co-operates with the externally threaded zone 14.

The support bush 18 has a seat or recess 20 for receiving an adjustment tool having a shape complementary to the recess 20.

The diameter of the support bush 18 is greater than the diameter of the hole 7', as will be clearly appreciated below.

Once the assembly 2 has been positioned in the receiving seat 4, the deformation chamber 12 is deformed by means of a positioning tool A, thereby fixing the assembly 2 to the receiving seat 4 (Figures 10-13).

Once this is effected, the support bush 18 is adjusted, by means of a tool having a shape complementary to the recess 20, via the hole 7', by rotation until it is brought into abutment against the wall in which the hole 7' is formed.

Referring to the second embodiment described above, it is possible for an element E to be fixed to the sandwich type structure 6 at the assembly 2 by means of a screw or other threaded assembly device, thereby obtaining flush fixing between the element E and the structure 6.

The above makes clear the advantages of the assembly to which the present invention relates.

The assembly to which the present invention relates is advantageously used for the provision of threaded seats in materials having a sandwich type structure, increasing the structural strength thereof; the mechanical fixing of the assembly does not require waiting times during use owing to the need for setting of any adhesives.

Naturally, the principle of the invention remaining the same, the description and illustrations may be varied widely, without thereby departing from the scope of protection of the present invention.

For example, the external part of the assembly may be entirely or partially knurled; through-holes for optional injection of adhesive after positioning may be formed in the support head, which may be of any geometric shape, and the external walls of the assembly 2 may be provided for total or partial deposit of an adhesive coating.

## Claims

1. An assembly (2) consisting of a threaded tubular rivet (10, 12, 14, 16) and a spacer bush (18), wherein the threaded tubular rivet (10, 12, 14, 16) comprises a support head (10), a deformation chamber (12), an externally threaded zone (14) and an internally threaded zone (16), and wherein the spacer bush (18) comprises an internally threaded zone co-operating with the externally threaded zone (14) of the threaded tubular rivet (10, 12, 14, 16) for threaded connection between the threaded tubular rivet (10, 12, 14, 16) and the spacer bush (18), and a seat or recess (20) for receiving an adjustment tool having a shape complementary to that of the seat or recess (20),
**characterized in that** said seat or recess (20) is not threaded and is provided in a bottom wall of the spacer bush (18).

2. A method for fixing an assembly according to claim 1 in a receiving seat (4) of a sandwich type structure (6) comprising a first and second walls, the method comprising the steps of:
positioning the assembly (2) in the receiving seat (4);
deforming the deformation chamber (12) by means of a positioning tool (A) engaging the internally threaded zone (16) of the threaded tubular rivet (10, 12, 14, 16); and
rotating the support bush (18) by means of an adjustment tool having a shape complementary to that of the seat or recess (20) of the support bush (18), until the support bush (18) is brought into abutment against the second wall of the structure (6).

## Patentansprüche

1. Anordnung (2), bestehend aus einem mit einem Gewinde versehenen rohrförmigen Niet (10, 12, 14, 16) und einer Abstandsbuchse (18), wobei der mit einem Gewinde versehene rohrförmige Niet (10, 12, 14, 16) einen Auflagekopf (10), eine Verformungskammer (12), eine außen mit einem Gewinde versehene Zone (14) und eine innen mit einem Gewinde versehene Zone (16) umfasst und wobei die Abstandsbuchse (18) eine innen mit einem Gewinde versehene Zone umfasst, die mit der außen mit einem Gewinde versehenen Zone (14) des mit einem Gewinde versehenen rohrförmigen Niets (10, 12, 14, 16) zusammenwirkt, um zwischen dem mit einem Gewinde versehenen rohrförmigen Niet (10, 12, 14, 16) und der Abstandsbuche (18) eine Gewindeverbindung zu schaffen, und eine Aufnahmefläche oder Ausnehmung (20), um ein Einstellwerkzeug mit einer Form aufzunehmen, die komplementär zu jener der Aufnahme oder der Ausnehmung (20) ist,
**dadurch gekennzeichnet, dass** die Aufnahmefläche oder Ausnehmung (20) nicht mit einem Gewinde versehen ist und in einer Bodenwand der Abstandsbuchse (18) bereitgestellt ist.

2. Verfahren zum Befestigen einer Anordnung nach Anspruch 1 in einer aufnehmenden Aufnahmefläche (4) einer Struktur vom Sandwich-Typ (6), umfassend eine erste und eine zweite Wand, wobei das Verfahren die folgenden Schritte umfasst:
Positionieren der Anordnung (2) in der aufnehmenden Aufnahmefläche (4);
Verformen der Verformungskammer (12) mittels eines Positionierungswerkzeugs (A), das in die innen mit einem Gewinde versehene Zone (16) des mit einem Gewinde versehenen rohrförmigen Niets (10, 12, 14, 16) eingreift; und
Drehen der Auflagebuchse (18) mittels eines Einstellwerkzeugs mit einer Form, die komplementär zu jener der Aufnahmefläche oder Ausnehmung (20) der Auflagebuchse (18) ist, bis die Auflagebuchse (18) gegen die zweite Wand der Struktur (6) anschlägt.

## Revendications

1. Ensemble (2) se constituant d'un rivet tubulaire fileté (10, 12, 14, 16) et d'une douille d'espacement (18), dans lequel le rivet tubulaire fileté (10, 12, 14, 16) comprend une tête de support (10), une chambre de déformation (12), une zone extérieurement filetée (14) et une zone intérieurement filetée (16), et dans lequel la douille d'espacement (18) comprend une zone intérieurement filetée coopérant avec la zone extérieurement filetée (14) du rivet tubulaire fileté (10, 12, 14, 16) pour le raccordement fileté entre le rivet tubulaire fileté (10, 12, 14, 16) et la douille d'espacement (18) et un siège ou évidement (20) pour recevoir un outil d'ajustement ayant une forme complémentaire de celle du siège ou de l'évidement (20),
**caractérisé en ce que** ledit siège ou évidement (20) n'est pas fileté et est prévu dans une paroi inférieure de la douille d'espacement (18).

2. Procédé pour fixer un ensemble selon la revendication 1 dans un siège de réception (4) d'une structure de type sandwich (6) comprenant une première et une deuxième paroi, le procédé comprenant les étapes consistant à :
positionner l'ensemble (2) dans le siège de réception (4) ;
déformer la chambre de déformation (12) au moyen d'un outil de positionnement (A) mettant en prise la zone intérieurement filetée (16) du rivet tubulaire fileté (10, 12, 14, 16) ; et
faire tourner la douille de support (18) au moyen d'un outil d'ajustement ayant une forme complémentaire de celle du siège ou de l'évidement (20) de la douille de support (18), jusqu'à ce que la douille de support (18) soit amenée en butée contre la deuxième paroi de la structure (6).
